# EUROPÄISCHE PATENTSCHRIFT

(11) **EP 2 683 591 B1**
(45) Veröffentlichungstag und Bekanntmachung des Hinweises auf die Patenterteilung: **07.01.2015**
(21) Anmeldenummer: 12710195.4
(22) Anmeldetag: 08.03.2012
(51) Int. Cl.: B62D 1/10, B62D 5/04, B62D 5/00

(54) **LENKRAD FÜR EIN KRAFTFAHRZEUG**
STEERING WHEEL FOR A MOTOR VEHICLE
VOLANT POUR VÉHICULE AUTOMOBILE

(30) Priorität: 09.03.2011 DE 102011005309; 19.04.2011 DE 202011005545 U
(43) Veröffentlichungstag der Anmeldung: 15.01.2014
(73) Patentinhaber: Takata AG, 63743 Aschaffenburg (DE)
(72) Erfinder: MARKFORT, Dieter, 13088 Berlin (DE)
(74) Vertreter: Staroske, Sandro
(86) Internationale Anmeldenummer: PCT/EP2012/054001
(87) Internationale Veröffentlichungsnummer: WO 2012/120079

(56) Entgegenhaltungen:
- EP-A1- 1 747 970
- WO-A1-2009/138462
- WO-A1-2010/115707

## Beschreibung

Die Erfindung betrifft ein Lenkrad für ein Kraftfahrzeug gemäß Anspruch 1.

Aus dem Stand der Technik sind Lenkräder, die eine Überlagerungslenkung realisieren, bekannt. Derartige Lenkräder weisen einen Überlagerungsantrieb zum Erzeugen eines Lenkwinkels auf, der mit einem vom Fahrer durch Betätigung des Lenkradkranzes des Lenkrades erzeugten Lenkwinkel überlagert wird, so dass sich eine Drehbewegung einer mit dem Lenkrad verbundenen Lenkwelle aus dem fahrerseitig erzeugten Lenkwinkel und dem durch den Überlagerungsantrieb erzeugten Lenkwinkel zusammensetzt. Beispielsweise ist ein Lenkrad mit Überlagerungsantrieb aus der WO 2007/009420 A1 bekannt.

Des Weiteren ist aus der WO 2010/115707A1 eine Arretierungseinrichtung zum Arretieren eines Überlagerungsantriebes eines Lenkrades bekannt.

Das der Erfindung zugrunde liegende Problem besteht darin, ein Lenkrad mit einer möglichst zuverlässigen Arretierungseinrichtung zum Arretieren eines Überlagerungsantriebs des Lenkrades zu schaffen.

Dieses Problem wird durch das Lenkrad mit den Merkmalen gemäß Anspruch 1 gelöst. Weiterbildungen der Erfindung sind in den abhängigen Ansprüchen angegeben.

Danach wird ein Lenkrad für ein Kraftfahrzeug bereitgestellt, mit
- einem Lenkradkranz, über den das Lenkrad von einem Fahrer des Kraftfahrzeuges zum Erzeugen eines Lenkwinkels betätigbar ist;
- einem Überlagerungsantrieb zum Erzeugen eines Lenkwinkels, der mit einem durch Betätigung des Lenkradkranzes erzeugten Lenkwinkel überlagerbar ist;
- einer von dem Überlagerungsantrieb verschiedene Arretierungseinrichtung, mit der der Überlagerungsantrieb durch mechanische Einwirkung arretierbar ist; und
- Lagerungsmittel, mittels derer ein Gehäuse der Arretierungseinrichtung an einem Gehäuse des Überlagerungsantriebs so elastisch gelagert ist, dass es eine Ausgleichsbewegung relativ zu dem Gehäuse des Überlagerungsantriebs ausführen kann.

Durch die elastische Lagerung des Gehäuses der Arretierungseinrichtung an dem Gehäuse des Überlagerungsantriebs wird also eine (begrenzte) Relativbewegung (Ausgleichsbewegung) der Arretierungseinrichtung relativ zu dem Überlagerungsantrieb ermöglicht, wenn die Arretierungseinrichtung mechanisch auf den Überlagerungsantrieb einwirkt, d.h. während des Arretiervorganges, nach dem Arretiervorgang oder während des Rückgängigmachens der Arretierung. Durch diese Lagerung der Arretierungseinrichtung wird z.B. der Entstehung von Vibrationen und Geräuschen entgegengewirkt und/oder Fertigungstoleranzen ausgeglichen. Des Weiteren erfolgt der Arretierungsvorgang aufgrund der elastischen Lagerung der Arretierungseinrichtung weitestgehend materialschonend für die am Arretiervorgang beteiligten Komponenten des Überlagerungsantriebes und der Arretierungseinrichtung.

Dass die Arretierungseinrichtung von dem Überlagerungsantrieb verschieden sein soll, bedeutet insbesondere, dass die Arretierungseinrichtung zu denjenigen Komponenten des Überlagerungsantriebes, die den zusätzlichen Lenkwinkel erzeugen, separat ausgebildet ist; d.h. insbesondere, dass die Arretierungseinrichtung nicht durch eine selbsthemmende Ausgestaltung des Überlagerungsantriebes gebildet ist. Die Arretierungseinrichtung kann daher zusammen mit einem selbsthemmenden oder einem nicht selbsthemmenden Überlagerungsantrieb zusammenwirken. Zudem sei erwähnt, dass die Formulierung, wonach die Arretierungseinrichtung elastisch an dem Überlagerungsantrieb "gelagert" ist, bedeutet, dass eine Ausgleichsbewegung sowohl in einer Freigabestellung der Arretierungseinrichtung, in der die Arretierungseinrichtung nicht auf den Überlagerungsantrieb einwirkt, als auch in einer Arretierstellung, in der die Arretierungseinrichtung auf den Überlagerungsantrieb einwirkt, möglich ist, d.h. eine elastische Lagerung der Arretierungseinrichtung nicht nur in Arretierstellung besteht.

Der Überlagerungsantrieb weist insbesondere eine mit einem Schneckenrad kämmende und in seinem Gehäuse angeordnete Antriebsschnecke auf, wobei die Arretierungseinrichtung an einem Abschnitt (Anlageabschnitt) des Gehäuses des Überlagerungsantriebes angeordnet und an dem Anlageabschnitt mittels der Lagerungsmittel elastisch gelagert ist. Beispielsweise ist auch das Schneckenrad in dem Gehäuse des Überlagerungsantriebes angeordnet. Darüber hinaus kann an dem Gehäuse des Überlagerungsantriebs ein Aktuator (beispielsweise ein Elektromotor) zum Antreiben der Antriebsschnecke angeordnet (insbesondere festgelegt) sein. Zudem kann das Gehäuse des Überlagerungsantriebs Verbindungsstrukturen (z.B. Befestigungsöffnungen) zum Verbinden des Überlagerungsantriebs mit dem Lenkrad aufweisen.

Des Weiteren kann die Arretierungseinrichtung ein Arretierelement zum mechanischen Arretieren des Überlagerungsantriebes sowie eine Aktuatoranordnung zum Bewegen des Arretierelementes aus einer Freigabeposition in eine Arretierposition oder umgekehrt aufweisen, wobei es in der Freigabeposition die Bewegung des Überlagerungsantriebs nicht beeinflusst und in der Arretierposition den Überlagerungsantrieb durch mechanische Einwirkung arretiert. Im verriegelten Zustand des Überlagerungsantriebs kann ein Lenkwinkel (also eine Drehbewegung der Lenkwelle) allein durch ein Drehmoment erzeugt werden, welches durch die fahrerseitige Betätigung des Lenkradkranzes eingeleitet wird. Das Arretierelement ist z.B. länglich ausgebildet (insbesondere in Form eines Bolzens).

Insbesondere umfasst die Aktuatoranordnung einen von dem Aktuator zum Antreiben der Antriebsschnecke separaten Aktuator (z.B. einen Elektromagneten, einen Elektromotor oder einen pneumatischen Antrieb) und z.B. auch elastische Mittel (z.B. eine Druckoder Zugfeder), die mit dem Arretierelement zusammenwirken. Das Arretierelement und die Aktuatoranordnung sind z.B. in einem gemeinsamen Gehäuse der Arretierungseinrichtung angeordnet. Das Gehäuse der Arretierungseinrichtung, in dem z.B. das Arretierelement und/oder die Aktuatoranordnung angeordnet sind (und z.B. auch das Gehäuse des Überlagerungsantriebs) ist z.B. (insbesondere einstückig) aus einem Kunststoff gebildet. Darüber hinaus können Mittel zur antistatischen Abschirmung des Gehäuses der Arretierungseinrichtung und/oder des Gehäuses des Überlagerungsantriebs vorgesehen sein.

Gemäß einer Ausgestaltung der Erfindung ist das Gehäuse der Arretierungseinrichtung an einem Anlageabschnitt des Gehäuses des Überlagerungsantriebs angeordnet.

Das Arretierelement wirkt insbesondere so mit einem mit der Antriebsschnecke des Überlagerungsantriebs rotierbaren (d.h. drehfest mit der Antriebsschnecke verbundenen) Element zusammen, dass es das rotierbare Element in Arretierungsposition per Reibund/oder Formschluss arretiert. Aufgrund dieses Reib- und/oder Formschlusses wird über das Arretierelement eine Kraft in die Arretierungseinrichtung (insbesondere in deren Gehäuse) eingeleitet, die aufgrund der elastischen Lagerung der Arretierungseinrichtung eine Ausgleichsbewegung der Arretierungseinrichtung relativ zu dem Gehäuse des Überlagerungsantriebs hervorruft. Durch diese Ausgleichsbewegung werden z.B. Belastungen des Überlagerungsantriebes (insbesondere der Antriebsschnecke oder des Aktuators zum Antreiben der Antriebsschnecke) und der Arretierungseinrichtung (insbesondere des Arretierelementes und des rotierbaren Elementes), die insbesondere bei hohen Drehzahlen zu Beschädigungen führen können, vermieden oder zumindest weitgehend reduziert. Eine Ausgleichsbewegung der Arretierungseinrichtung kann auch durch eine Lenkbewegung des Fahrers bei arretierter Arretierungseinrichtung entstehen.

Wie weiter unten noch ausführlicher beschrieben wird, weist die Arretierungseinrichtung insbesondere eine Arretierscheibe als rotierbares Element auf, die im Bereich ihres äußeren Randes Aussparungen aufweist, in die das Arretierelement in Arretierposition eingreift und eine Rotation der Antriebsschnecke blockiert.

Wie erwähnt, ist das Gehäuse der Arretierungseinrichtung über die Lagerungsmittel elastisch insbesondere an einem Anlageabschnitt des Gehäuses des Überlagerungsantriebes gelagert. Beispielsweise umfassen die Lagerungsmittel mindestens ein elastisches Element, das zwischen dem Gehäuse des Überlagerungsantriebs, insbesondere dessen Anlageabschnitt, und dem Gehäuse der Arretierungseinrichtung angeordnet ist. Beispielsweise ist das elastische Element in Form mindestens einer Lage aus einem elastischem Material (zum Beispiel aus einem elastischen Kunststoff) ausgebildet, die z.B. zwischen dem Anlageabschnitt des Überlagerungsantriebsgehäuses und dem Gehäuse der Arretierungseinrichtung angeordnet ist, wobei die Lage mit einer Seite an dem Anlageabschnitt des Überlagerungsantriebsgehäuses und mit einer dem Überlagerungsantriebsgehäuse abgewandten Seite an dem Gehäuse der Arretierungseinrichtung anliegt. Der Anlageabschnitt des Gehäuses des Überlagerungsantriebes stellt insbesondere auch eine Führungsfläche für die Ausgleichsbewegung der Arretierungseinrichtung bei Belastung während des Arretiervorganges dar.

Gemäß einer anderen Ausgestaltung der Erfindung weisen die Lagerungsmittel mindestens ein elastisches Element auf, das zwischen dem Aktuator der Arretierungseinrichtung und einer Innenseite des Gehäuses der Arretierungseinrichtung angeordnet ist. Beispielsweise handelt es sich hier bei dem elastischen Element um mindestens eine elastische Lage, die sich zwischen dem Aktuator und dem Gehäuse der Arretierungseinrichtung erstreckt. Der Aktuator kann auch in einem separaten Gehäuse angeordnet sein, wobei sich das elastische Element (bzw. die mehreren elastischen Elemente) dann zwischen diesem Aktuatorgehäuse und der Innenseite des Gehäuses der Arretierungseinrichtung befindet. Es ist allgemeiner formuliert auch möglich, dass Lagerungsmittel vorgesehen sind, die eine Ausgleichsbewegung des Arretierelementes relativ zu dem Gehäuse der Arretierungseinrichtung ermöglichen, beispielsweise in Form von mindestens einem elastischen Element, das sich zwischen dem Aktuator der Arretierungseinrichtung und dem Gehäuse der Arretierungseinrichtung befindet. Diese Variante kann auch unabhängig von der elastischen Lagerung der Arretierungseinrichtung, die eine Ausgleichsbewegung der Arretierungseinrichtung relativ zu dem Überlagerungsantrieb ermöglicht, verwirklicht sein.

Des Weiteren ist denkbar, dass die Arretierungseinrichtung über mindestens ein Befestigungselement, das eine Aussparung in dem Gehäuse der Arretierungseinrichtung durchgreift, an dem Überlagerungsantrieb festgelegt ist. Insbesondere umfassen die Lagerungsmittel hier mindestens ein elastisches Element, das sich zwischen dem Befestigungselement und einer dem Befestigungselement zugewandten Innenseite der Aussparung erstreckt. Das Befestigungselement ist insbesondere in einer in der Aussparung angeordneten elastischen Hülse (d.h. einem hohlzylindrischen Element) als elastisches Element geführt, wobei die Aussparung in Form einer Durchgangsbohrung in dem Gehäuse der Arretierungseinrichtung ausgebildet ist. Das Befestigungselement ist z.B. eine Schraube, die durch die elastische Hülse hindurchgeführt ist und die in einen Abschnitt des Gehäuses des Überlagerungsantriebs eingeschraubt ist. Selbstverständlich können auch andere Arten von Befestigungselementen verwendet werden, z.B. Nieten.

Die Durchgangsbohrung in dem Gehäuse der Arretierungseinrichtung weist insbesondere im Vergleich mit dem Außendurchmesser des Befestigungselementes einen größeren Innendurchmesser auf, so dass sich die elastische Hülse zwischen dem Befestigungselement und der Innenseite der Durchgangsbohrung erstrecken kann. Des Weiteren können selbstverständlich mehrere, über eine elastische Hülse gelagerte Befestigungselemente vorhanden sein, z.B. können auch sämtliche Befestigungselemente, über die das Gehäuse der Arretierungseinrichtung mit dem Gehäuse des Überlagerungsantriebs verbunden ist, elastisch, d.h. mittels einer elastischen Hülse, gelagert sein.

Gemäß einer weiteren Ausgestaltung weist die Arretierungseinrichtung, wie oben bereits angesprochen, ein mit dem Überlagerungsantrieb gekoppeltes rotierbares Element auf, mit dem das Arretierelement in Arretierposition so mechanisch zusammenwirkt, dass es den Überlagerungsantrieb arretiert. Hier können mindestens zwei Befestigungselemente vorgesehen sein, die sich jeweils durch eine Aussparung in dem Gehäuse der Arretierungseinrichtung hindurch erstrecken, wobei zwischen dem dem rotierbaren Element - in Richtung des Arretierelementes betrachtet - näher gelegenen Befestigungselement und der von diesem Befestigungselement durchgriffenen Aussparung ein elastisches Element der Lagerungsmittel angeordnet ist, zwischen dem von dem rotierbaren Element weiter entfernten Befestigungselement und der von diesem Befestigungselement durchgriffenen Aussparung jedoch nicht.

Somit ist die Arretierungseinrichtung nur an dem, dem rotierbaren Element näher gelegene Befestigungselement elastisch gelagert, nicht jedoch an dem weiter entfernten. Es ist grundsätzlich auch der umgekehrte Fall möglich, nämlich, dass die Arretierungseinrichtung an dem weiter entfernt zu dem rotierbaren Element angeordneten Befestigungselement elastisch gelagert ist und an dem näher gelegenen nicht. Es wird zudem darauf hingewiesen, dass auch mehr als zwei Befestigungselemente vorhanden sein können und die Arretierungseinrichtung an mehr als einem Befestigungselement elastisch gelagert sein kann, wobei jedoch ein (insbesondere genau ein) Befestigungselement nicht für die elastische Lagerung vorgesehen ist.

Beispielsweise handelt es sich, wie oben bereits erwähnt, bei den Befestigungselementen jeweils um eine Schraube oder einen Niet, die jeweils eine Durchgangsbohrung in dem Gehäuse der Arretierungseinrichtung durchgreifen.

Dadurch, dass ein Befestigungselement nicht für die elastische Lagerung vorgesehen ist (sondern z.B. nur das dem rotierbaren Element näher oder am nächsten gelegene Befestigungselement), kommt es bei einem Bewegen des Arretierelementes aus der Freigabe- in die Arretierposition aufgrund des mechanischen Kontaktes zwischen dem Arretierelement und dem rotierbaren Element zu einer Ausgleichsbewegung der Arretierungseinrichtung (und damit des Arretierelementes) in Form einer Schwenkbewegung um die Achse des nicht für die elastische Lagerung vorgesehenen Befestigungselementes, insbesondere in einer Ebene parallel zu dem eine plane Führungsfläche darstellenden Anlageabschnitt.

Es ist auch denkbar, dass die Arretierungseinrichtung über sämtliche jeweils mit einem elastischen Element versehene Befestigungselemente an dem Anlageabschnitt des Gehäuses des Überlagerungsantriebs festgelegt (elastisch gelagert) ist. Hierdurch wird beim Bewegen des Arretierelementes in seine Arretierposition eine Ausgleichsbewegung der Arretierungseinrichtung ermöglicht, die in alle Richtungen parallel zu einem eine plane Führungsfläche darstellenden Anlageabschnitt weisen kann. Beispielsweise sind die beiden Befestigungselemente symmetrisch zu einer Ebene angeordnet, in der die Haupterstreckungsrichtung des Arretierelementes und die Achse der Antriebsschnecke liegen und weisen somit den gleichen Abstand zu dem rotierbaren Element auf. Die "Haupterstreckungsrichtung" des Arretierelementes ist diejenige Richtung, in der das Arretierelement seine größte Ausdehnung besitzt. Beispielsweise verläuft die Haupterstreckungsrichtung bei einem länglich ausgebildeten Arretierelement entlang dessen Längsachse.

Es ist natürlich auch möglich, dass die Arretierungseinrichtung so elastisch an dem Überlagerungsantrieb gelagert ist, dass sie sowohl eine rotatorische als auch eine lineare Ausgleichsbewegung ausführen kann, wobei sich z.B. eine resultierende Bewegung aus einer Überlagerung der beiden Bewegungsformen ergibt. Beispielsweise verläuft der Anlageabschnitt des Gehäuses des Überlagerungsantriebes gekrümmt, z. B. in Form eines Segmentes eines Kreiszylinders, und die Arretierungseinrichtung ist über zwei (beispielsweise mit dem gleichen Abstand zu dem rotierbaren Element angeordneten) sich jeweils in einer elastischen Hülse erstreckende Befestigungselemente mit dem Anlageabschnitt verbunden, so dass sowohl eine Schwenkbewegung entlang der gekrümmten Oberfläche des Anlageabschnitts (d. h. um die Achse der Antriebsschnecke des Überlagerungsantriebs herum) als auch eine Bewegung längs zur Achse der Antriebsschnecke möglich ist.

Eine rein lineare Ausgleichsbewegung könnte z.B. durch eine elastische Lagerung der Arretierungseinrichtung an sämtlichen Befestigungselementen und gleichzeitigem Vorsehen von speziell ausgeführten Führungselementen, erzeugt werden. Des Weiteren ist denkbar, dass sich, wie oben bereits angedeutet, zwischen dem planen Anlageabschnitt eine (ebenfalls plane) elastische Lage erstreckt.

Gemäß einer weiteren Ausgestaltung der Erfindung weist das Gehäuse des Überlagerungsantriebs einen sich schräg oder quer (senkrecht) zur Längsachse der Antriebsschnecke erstreckenden Halterungsabschnitt auf, in dem eine Aussparung ausgebildet ist, in die ein Abschnitt des Gehäuses der Arretierungseinrichtung hineinragt, wobei die Lagerungsmittel mindestens ein elastisches Element umfassen, das zwischen dem Halterungsabschnitt und dem in die Aussparung hineinragenden Abschnitt des Gehäuses der Arretierungseinrichtung angeordnet ist.

Die Aussparung in dem Halterungsabschnitt ist z.B. rechteckig ausgebildet, wobei die Erfindung natürlich nicht auf eine bestimmte Geometrie der Aussparung festgelegt ist. Beispielsweise kann die Aussparung in dem Halterungsabschnitt auch kreisförmig ausgebildet sein. Das elastische Element erstreckt sich insbesondere zwischen dem Rand der Aussparung und einer Außenseite des in die Aussparung hineinragenden Abschnitts des Gehäuses der Arretierungseinrichtung, wobei das elastische Element den hineinragenden Abschnitt z.B. vollständig umgibt, d.h. es erstreckt sich entlang des gesamten Randes der Aussparung. Dies ist jedoch nicht zwingend notwendig; es ist auch denkbar, dass das elastische Element nur entlang eines Teils des Randes der Aussparung verläuft.

Des Weiteren kann das Gehäuse des Überlagerungsantriebs einen sich schräg oder quer (senkrecht) zur Längsachse der Antriebsschnecke erstreckenden Verbindungsabschnitt aufweisen, wobei die Lagerungsmittel mindestens ein elastisches Element umfassen, über das ein Abschnitt des Gehäuses der Arretierungseinrichtung auf dem Verbindungsabschnitt aufliegt. Insbesondere ist der Verbindungsabschnitt zumindest näherungsweise zylindrisch (domartig) ausgebildet, wobei sich das elastische Element zwischen einer Stirnseite des Verbindungsabschnitts und dem Gehäuse der Arretierungseinrichtung befindet.

Insbesondere ist in dem auf dem Verbindungsabschnitt aufliegenden Abschnitt des Gehäuses der Arretierungseinrichtung eine Aussparung ausgebildet, durch die ein Befestigungselement (s.o.) hindurchgreift, über das die Arretierungseinrichtung an dem Überlagerungsantrieb festgelegt ist. Die Lagerungsmittel umfassen z.B. mindestens ein weiteres elastisches Element, das sich zwischen dem Befestigungselement und einer dem Befestigungselement zugewandten Innenseite der Aussparung erstreckt. Geeignete elastische Elemente für diesen Zweck wurden bereits weiter oben erläutert.

Die Antriebsschnecke des Überlagerungsantriebs ist insbesondere parallel zur Haupterstreckungsrichtung des Arretierelementes (d. h. insbesondere parallel zur Längsachse des Arretierelementes) orientiert. Es ist jedoch auch denkbar, dass die Achse der Antriebsschnecke schräg zur Haupterstreckungsrichtung des Arretierelementes verläuft. Hierbei ist beispielsweise der Anlageabschnitt des Gehäuses des Überlagerungsantriebs gekrümmt in Form eines Segmentes eines Hohlkegels (z.B. eines geraden Kreiskegels) ausgebildet, wobei die Achse des Kegels z.B. mit der Achse der Antriebsschnecke zusammenfällt.

Es ist darüber hinaus möglich, dass die Antriebsschnecke des Überlagerungsantriebs über die Lagerungsmittel elastisch in dem Gehäuse des Überlagerungsantriebs gelagert ist, insbesondere über mindestens ein sich zwischen der Antriebsschnecke und einer Innenseite des Gehäuses (z.B. hülsenartig) erstreckendes elastisches Element.

Die Erfindung wird im Folgenden anhand von Ausführungsbeispielen unter Bezugnahme auf die Figuren näher erläutert. Es zeigen:
- Fig. 1: ein Lenkrad gemäß einem Ausführungsbeispiel der Erfindung in Draufsicht von einer einem Fahrer abgewandten Seite aus gesehen;
- Fig. 2: eine vergrößerte Darstellung eines Überlagerungsantriebs eines Lenkrades gemäß einem zweiten Ausführungsbeispiel der Erfindung;
- Fig. 3A: den Überlagerungsantrieb des Lenkrades aus Fig. 1 in perspektivischer Darstellung;
- Fig. 3B: den Überlagerungsantrieb des Lenkrades aus Fig. 3A in perspektivischer Explosionsdarstellung;
- Fig. 4A: den Überlagerungsantrieb eines Lenkrades gemäß einem dritten Ausführungsbeispiel der Erfindung in perspektivischer Darstellung;
- Fig. 4B: den Überlagerungsantrieb aus Fig. 4A in perspektivischer Explosionsdarstellung;
- Fig. 5A: den Überlagerungsantrieb und die Arretierungseinrichtung eines Lenkrades gemäß einem vierten Ausführungsbeispiel der Erfindung in perspektivischer Darstellung;
- Fig. 5B: den Überlagerungsantrieb und die Arretierungseinrichtung der Fig. 5A in Explosionsdarstellung;
- Fig. 6: eine Abwandlung des Überlagerungsantriebs und der Arretierungseinrichtung der Fig. 5A und 5B.

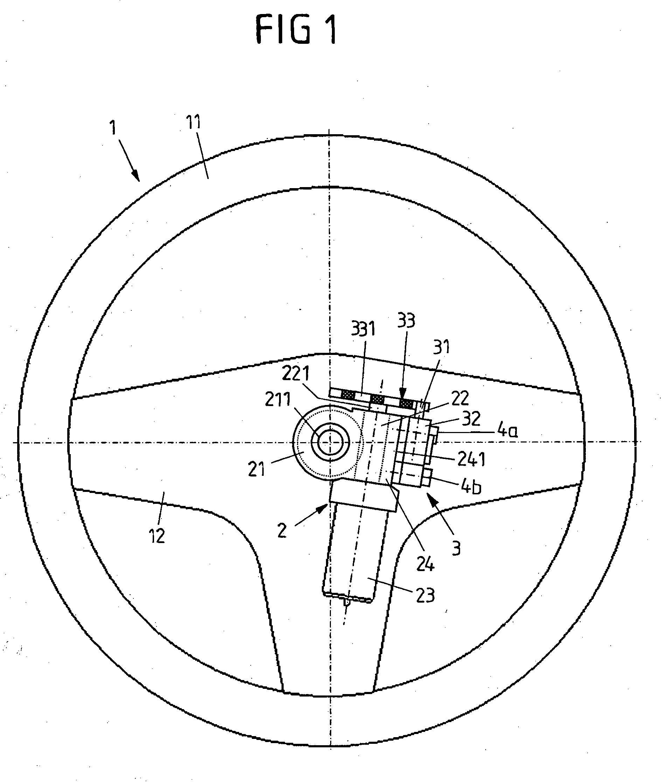

Das in Figur 1 dargestellte erfindungsgemäße Lenkrad 1 weist einen Lenkradkranz 11 auf, über den ein Fahrer des Kraftfahrzeuges das Lenkrad drehen und somit einer mit dem Lenkrad verbundenen Lenkwelle einen Lenkwinkel aufprägen kann. Das Lenkrad 1 weist des Weiteren einen Überlagerungsantrieb 2 auf, mit dem der Lenkwelle ein zusätzlicher Lenkwinkel aufgeprägt werden kann, der dem durch Drehen des Lenkradkranzes in die Lenkwelle eingeleiteten Lenkwinkel überlagert wird.

Der Überlagerungsantrieb 2 ist insbesondere an einer dem Fahrer abgewandten Seite von Speichen 12 des Lenkrades 1, die den Lenkradkranz 11 mit einer zentralen Lenkradnabe verbinden, im Bereich dieser zentralen Lenkradnabe angeordnet und weist eine mit einem Schneckenrad 21 kämmende Antriebsschnecke 22 auf. Das Schneckenrad 21 ist über einen Fortsatz 211, der aus einem Gehäuse 24 des Überlagerungsantriebes herausragt, mit der Lenkwelle des Fahrzeugs gekoppelt, so dass eine Drehbewegung des Schneckenrades auf die Lenkwelle übertragen wird. Der Antrieb der Antriebsschnecke 22 erfolgt über einen Aktuator 23, der insbesondere in Form eines Elektromotors ausgebildet ist. Eine mögliche Ausgestaltung des Überlagerungsantriebes sowie dessen Befestigung am Lenkrad und mit der Lenkwelle sind z. B. in der WO 2010/11 57 07 A1 beschrieben, auf die insofern ausdrücklich Bezug genommen wird.

Das Lenkrad 1 weist des Weiteren eine zu dem Überlagerungsantrieb 2 separate Arretierungseinrichtung 3 auf, die dazu dient, den Überlagerungsantrieb durch mechanische Einwirkung zu arretieren; beispielsweise um bei einem Ausfall des Überlagerungsantriebes, bzw. in dessen nicht aktivem Zustand, ein sicheres Einleiten eines Lenkwinkels in die Lenkwelle durch ein vom Fahrer über den Lenkradkranz 11 aufgebrachtes Drehmoment zu gewährleisten.

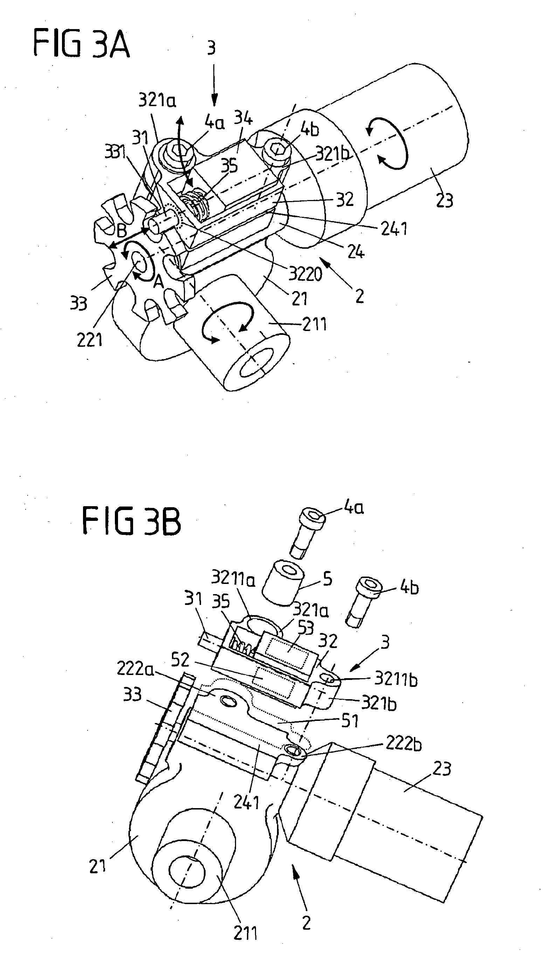

Die Arretierungseinrichtung 3 weist ein Arretierelement in Form eines Arretierbolzens 31 auf, der über einen (z. B. elektromagnetischen) Aktuator axial aus einer Freigabeposition in die in Figur 1 dargestellte Arretierposition bewegbar ist. Der Aktuator der Arretierungseinrichtung 3 und der Arretierbolzens 31 befinden sich im Innern eines Gehäuses 32, wobei der Arretierbolzen 31 in Arretierposition mit einem Abschnitt aus einer Öffnung 3220 des Gehäuses 32 hinausragt, wobei die Öffnung 3220 als Führung für den Arretierbolzen dienen kann, d.h. der Arretierbolzen kann an dem Rand der Öffnung anliegen. Es ist jedoch auch möglich, dass zusätzliche Mittel zur Führung des Arretierbolzens 31 vorgesehen sind, z.B. eine von dem Gehäuse 32 separate (insbesondere in der Öffnung 3220 angeordnete) Hülse (durch gestrichelten Umriss angedeutet). Das Gehäuse 32 ist an einem flanschartigen Anlageabschnitt 241 eines Gehäuses 24 des Überlagerungsantriebes befestigt, worauf im Einzelnen weiter unten im Zusammenhang mit den Figuren 3A und 3B eingegangen werden wird.

Der Arretierbolzen 31 wirkt in seiner Arretierposition mit einem rotierbaren Element in Form einer Arretierscheibe 33 zusammen, wobei die Arretierscheibe 33 drehfest mit einem aus dem Gehäuse 24 des Überlagerungsantriebes herausragenden freien Ende 221 der Antriebsschnecke 22 gekoppelt ist. Die Arretierscheibe 33 weist zudem entlang ihres äußeren Umfanges Aussparungen 331 auf, in die ein aus dem Gehäuse 32 der Arretierungseinrichtung 3 herausgreifendes freies Ende des Arretierbolzens 31 eingreift und die Arretierscheibe 33 vorwiegend formschlüssig verriegelt, so dass auch die mit der Arretierscheibe gekoppelte Antriebsschnecke 22 blockiert ist. Es wird darauf hingewiesen, dass die Arretierungseinrichtung auch andere Mittel zum mechanischen Einwirken auf den Überlagerungsantrieb aufweisen kann. Beispielsweise kann ein Halteelement vorgesehen sein, das an die Antriebsschnecke anlegbar ist, um diese per Reibschluss zu arretieren.

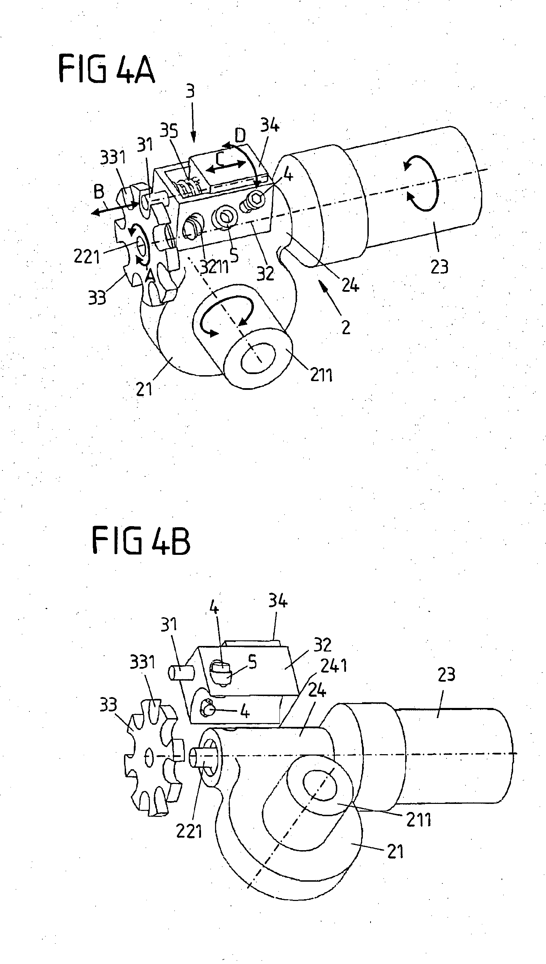

Beim Bewegen des Arretierbolzens 31 in die Arretierposition kommt es zu einem mechanischen Kontakt des freien Endes des Arretierbolzens mit der Arretierscheibe 33, d.h. zu einer Krafteinleitung in den Arretierbolzen, durch die z. B. Vibrationen entstehen können, die sich auf den Lenkradkranz 11 über die Speichen 12 des Lenkrades ausbreiten. Um derartige Vibrationen möglichst zu unterdrücken, weist das Lenkrad Lagerungsmittel auf, über die die Arretierungseinrichtung 3 elastisch an dem Überlagerungsantrieb gelagert ist. Diese elastische Lagerung wird anhand der Figuren 3A und 3B sowie 4A und 4B näher erläutert.

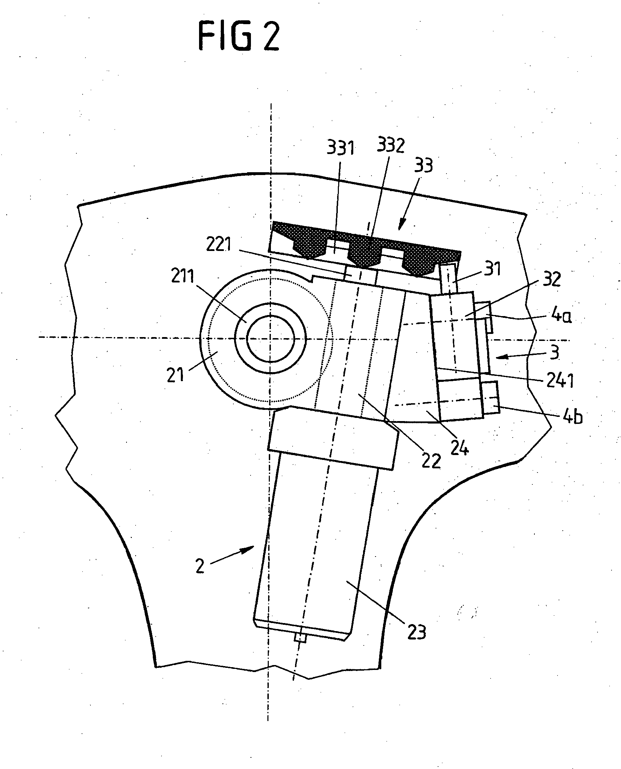

Im Ausführungsbeispiel der Figur 1 sind die Aussparungen 331 der Arretierscheibe in Form von Durchgangsöffnungen ausgebildet. Figur 2 zeigt eine etwas andere Ausgestaltung der Arretierscheibe 33, wonach sich die Aussparungen 331 von einer dem Arretierbolzen 31 zugewandten Seite nur bis zu einer vorgebbaren Tiefe der Arretierscheibe 33 erstrecken, d. h. nicht durchgängig ausgebildet sind. Darüber hinaus weisen Abschnitte 332 der Arretierscheibe 33, die sich zwischen den Aussparungen 331 erstrecken, einen dem Arretierbolzen 31 (bzw. der Antriebsschnecke 22) zugewandten Teilbereich auf, der sich auf die Antriebsschnecke 22 zu verjüngt, um das Einlaufen des freien Endes des Arretierbolzens 31 in eine der Aussparungen 331 zu erleichtern. Beispielsweise ist der sich verjüngende Teilbereich der Abschnitte 332 dachförmig abgeschrägt, wobei die Abschrägungen in Richtung der benachbarten Aussparungen 331 verlaufen.

Des Weiteren sind im Ausführungsbeispiel der Figur 2 die Antriebsschnecke 22 und die Arretierungseinrichtung 3 nicht parallel, sondern geneigt zueinander angeordnet. Genauer erstrecken sich die Achse der Antriebsschnecke 22 und die Längsachse des Arretierbolzens 31 unter einem spitzen Winkel zueinander. Entsprechend ist auch die Anlagefläche 241, über die das Gehäuse 32 der Arretierungseinrichtung 3 an dem Gehäuse 24 des Überlagerungsantriebes 2 anliegt, geneigt zur Achse der Antriebsschnecke 22 ausgebildet. Es ist auch denkbar, dass die Anlagefläche 241 gekrümmt verläuft, beispielsweise in Form eines Segmentes eines geraden Kreiskegels, wobei die an dieser Anlagefläche anliegende Oberfläche des Gehäuses 32 der Arretierungseinrichtung 3 entsprechend komplementär gewölbt ausgebildet ist.

Es ist natürlich auch möglich, dass die schräge Orientierung von Schneckenrad und Arretierbolzen zueinander sowie die Abschrägungen der Arretierscheibe 33 im Ausführungsbeispiel der Figur 1 verwendet werden, d. h. zusammen mit der dort dargestellten Arretierscheibe 33, die durchgehende Aussparungen 331 aufweist. Des Weiteren wird darauf hingewiesen, dass gemäß dem Ausführungsbeispiel der Figur 3A die Rotationsachsen des Schneckenrades 21 und der Antriebsschnecke 22 zwar senkrecht zueinander orientiert sind. Dies ist jedoch nicht zwingend, sondern es können selbstverständlich auch andere Orientierungen von Antriebsschnecke und Schneckenrad zueinander vorgesehen sein.

Figur 3A zeigt den Überlagerungsantrieb 2 zusammen mit der Arretierungseinrichtung 3 aus Figur 1 in perspektivischer Darstellung, Figur 3B in Explosionsdarstellung. In den Figuren 3A und 3B ist das Gehäuse 32 der Arretierungseinrichtung 3 halb offen dargestellt, um die sich im Innern des Gehäuses 32 befindlichen Komponenten der Arretierungseinrichtung 3 zu zeigen. Das Gehäuse 32 ist jedoch normalerweise geschlossen ausgeführt, insbesondere derart, dass es die im Innern des Gehäuses befindlichen Komponenten möglichst dicht einschließt, z.B. um eine möglichst gute Geräuschdämpfung zu erzielen und/oder um Verschmutzungen der Komponenten zu vermeiden.

Die Arretierungseinrichtung 3 weist, wie oben bereits erwähnt, im Innern des Gehäuses 32 als Bestandteil einer Aktuatoranordnung einen Aktuator 34 zum Bewegen des Arretierbolzens 31 entlang dessen Längsrichtung (Pfeil B) auf. Insbesondere ist der Aktuator 34 in Form einer elektromagnetischen Einrichtung (ähnlich einem Relais) ausgebildet, wobei der Aktuator 34 in einem eigenen Gehäuse angeordnet ist, das von dem Außengehäuse 32 der Arretierungseinrichtung 3 umschlossen ist. Es ist jedoch selbstverständlich nicht zwingend, dass der Aktuator in einem eigenen, zusätzlichen Gehäuse untergebracht ist.

Des Weiteren weist die Aktuatoranordnung der Arretierungseinrichtung 3 eine ebenfalls in dem Gehäuse 32 angeordnete Druckfeder 35 auf, die die Tendenz hat, den Arretierungsbolzen 31 in Eingriff mit der Arretierscheibe 33, d.h. in Arretierposition, zu halten. Bei Aktivierung des Aktuators 34 wird der Befestigungsbolzen 31 dann gegen die Rückstellkraft der Feder 35 in die Freigabeposition bewegt und somit außer Eingriff mit der Arretierscheibe 33 gebracht. Das heißt, die Arretierungseinrichtung 3 erfüllt ihre Funktion, nämlich den Überlagerungsantrieb 2 zu arretieren, in ihrem deaktivierten Zustand. Der Aktuator 34 wird insbesondere über ein elektrisches Signal des Fahrzeugs (insbesondere einer ECU) aktiviert (bestromt). Es ist auch denkbar, dass bei entsprechender Auslegung anstelle einer Druckfeder eine Zugfeder verwendet wird, die den Arretierbolzen auch hier vor Aktivieren in der Arretierposition hält und der Arretierbolzen bei Aktivieren in die Freigabeposition bewegt wird. Des Weiteren ist möglich, dass der Überlagerungsantrieb 2 vor dem Deaktivieren oder gleichzeitig mit dem Deaktivieren der Arretierungseinrichtung 3 (d.h. des Aktuators 34) ebenfalls deaktiviert wird, d.h. die Bestromung des Aktuators, der die Antriebsschnecke antreibt, unterbrochen wird.

Das Gehäuse 32 der Arretierungseinrichtung 3 weist zwei Ausbuchtungen 321 a, 321 b auf, in denen sich Durchgangsöffnungen 3211a, 3211b befinden, durch die sich jeweils ein Befestigungselement in Form einer Schraube 4a, 4b hindurch erstreckt. Die Schrauben 4a, 4b sind in entsprechend ausgebildete Verbindungsbereiche 222a, 222b des Anlageabschnitts 241 des Gehäuses 24 des Überlagerungsantriebs 2 eingeschraubt, so dass das Gehäuse 32 der Arretierungseinrichtung 3 an dem Gehäuse 24 des Überlagerungsantriebs 2 festgelegt ist und mit einer Seite an dem Anlageabschnitt 241 anliegt.

Die vordere (d.h. die näher zu der Arretierscheibe 33 angeordnete Bohrung 3211 a) der beiden Durchgangsbohrungen weist einen Innendurchmesser auf, der wesentlich größer ist als der Außendurchmesser der die Bohrung 3211 a durchgreifenden Schraube 4a. Der Grund dafür ist, dass in die Durchgangsbohrung 3211 a eine elastische Hülse 5 als Lagerungsmittel eingesetzt ist, durch die sich der Schaft der Schraube 4a hindurch erstreckt, so dass über die elastische Hülse 5 eine elastische Lagerung der Arretierungseinrichtung 3 an dem Überlagerungsantrieb 2 realisiert wird. Zusätzlich oder alternativ können die Lagerungsmittel weitere elastische Elemente aufweisen, z.B. ein im Wesentlichen plan ausgestaltetes elastisches Element 51 (gestrichelter Umriss in Figur 3B), das sich zwischen der Anlagefläche 241 des Gehäuses 24 des Überlagerungsantriebs 2 und dem Gehäuse 32 der Arretierungseinrichtung 3 erstreckt. Darüber hinaus können elastische Elemente 52, 53 auch im Innern des Gehäuses 32 der Arretierungseinrichtung 3 vorgesehen sein, die sich zum Beispiel zwischen dem Gehäuse des Aktuators 34 und einer Innenseite des Außengehäuses 32 der Arretierungseinrichtung 3 befinden (ebenfalls durch gestrichelte Umrisse in Figur 3B angedeutet).

Die Arretierungseinrichtung ist an der hinteren Befestigungsschraube 4b, d.h. diejenigen der beiden Schrauben 4a, 4b, die den größeren Abstand entlang des Arretierbolzen 31 zur Arretierscheibe 33 aufweist, nicht elastisch gelagert, d.h. es erstreckt sich zwischen dem Schaft der Schraube 4b und der Innenseite der Durchgangsbohrung 3211 b kein elastisches Element. Insbesondere durchgreift die hintere Schraube 4b passgenau (mit nur geringem Spiel) die hintere Durchgangsöffnung 3211 b. Dies hat zur Folge, dass, wenn der Arretierungsbolzen 31 mit der Arretierscheibe 33 in Eingriff gebracht wird, so dass es zu einem mechanischen Kontakt zwischen dem Arretierbolzen 31 und der Arretierscheibe 33 und somit zu einer Krafteinleitung in den Arretierbolzen 31 insbesondere senkrecht zu seiner Längsachse kommt, die Hülse 5 deformiert wird und das Gehäuse 32 eine Ausgleichsbewegung in Form einer Schwenkbewegung um die Längsachse der hinteren Schraube 4b ausführt. Die Ausgleichsbewegung erfolgt hier parallel zur Anlagefläche 241.

Es ist natürlich auch denkbar, dass auch die hintere Befestigungsschraube 4b analog zur vorderen Befestigungsschraube 4a in einer elastischen Hülse geführt ist, so dass die Arretierungseinrichtung 3 eine im Prinzip beliebige Ausgleichsbewegung entlang der Ebene der Anlagefläche 241 des Gehäuses 24 des Überlagerungsantriebs 3 ausführen kann.

Die Figuren 4A und 4B zeigen einen Überlagerungsantrieb zusammen mit einer Arretierungseinrichtung eines Lenkrades gemäß einem weiteren Ausführungsbeispiel der Erfindung. Im Unterschied zum Ausführungsbeispiel der Figuren 3A und 3B verläuft die Anlagefläche 241 des Gehäuses 24 des Überlagerungsantriebes 3 nicht plan, sondern gekrümmt als Segment eines Kreiszylinders. Entsprechend ist auch die dem Anlageabschnitt 241 zugewandte Seite des Gehäuses 32 der Arretierungseinrichtung 3 gekrümmt ausgeformt (komplementär zur Krümmung des Anlageabschnitts 241). Das Gehäuse 32 ist wie in den Figuren 3A und 3B halboffen dargestellt, um die im Gehäuseinneren befindlichen Komponenten nicht zu verdecken. Wie erwähnt, ist das Gehäuse jedoch üblicherweise geschlossen ausgeführt.

Des Weiteren weist das Gehäuse 32 der Arretierungseinrichtung 3 zwei Durchgangsbohrungen 3211 auf, durch die sich analog zu den Figuren 3A und 3B Befestigungsschrauben 4 hindurch erstrecken, die das Gehäuse 32 in dem Gehäuse des Überlagerungsantriebes festlegen. Beide Schrauben 4 sind jeweils in einer elastischen Hülse 5 durch die Durchgangsbohrungen 3211 hindurchgeführt, wodurch eine elastische Lagerung der Arretierungseinrichtung 3 an dem Überlagerungsantrieb 2 realisiert wird. In Fig. 4A ist (die auf einer dem Betrachter zugewandten Seite des Gehäuses 32) angeordnete Kombination aus Hülse 5 und Schraube 4 in Explosionsdarstellung gezeigt.

Die Durchgangsbohrungen 3211 sind symmetrisch in Bezug auf eine Ebene angeordnet, in der sich die Längsachse des Arretierbolzens 31 und die Längsachse der Antriebsschnecke 22 erstrecken. Diese Anordnung ermöglicht aufgrund der elastischen Lagerung der Arretierungseinrichtung 3 im Bereich der Schrauben 4 über die elastischen Hülsen 5 eine lineare Ausgleichsbewegung der Arretierungseinrichtung 3 in Richtung der Längsachse des Arretierbolzens 31 (Pfeil C) und gleichzeitig auch eine rotatorische Ausgleichsbewegung (Pfeil D) entlang des gekrümmten Anlageabschnitts 241 des Gehäuses 24 des Überlagerungsantriebes 2, d.h. um die Längsachse der Antriebsschnecke 22. Die resultierende Ausgleichsbewegung der Arretierungseinrichtung 3 ergibt sich aus einer Überlagerung der beiden beschriebenen Bewegungsformen. Die Bohrungen 3211 in den Seitenflächen des Gehäuses 32 der Arretierungseinrichtung 3 verlaufen auf die Achse der Antriebsschnecke 22 zu und im Wesentlich unter einem Winkel von 90° zu dieser, so dass sie im Wesentlichen senkrecht auf den Anlageabschnitt 241 des Gehäuses 24 des Überlagerungsantriebes 2 treffen.

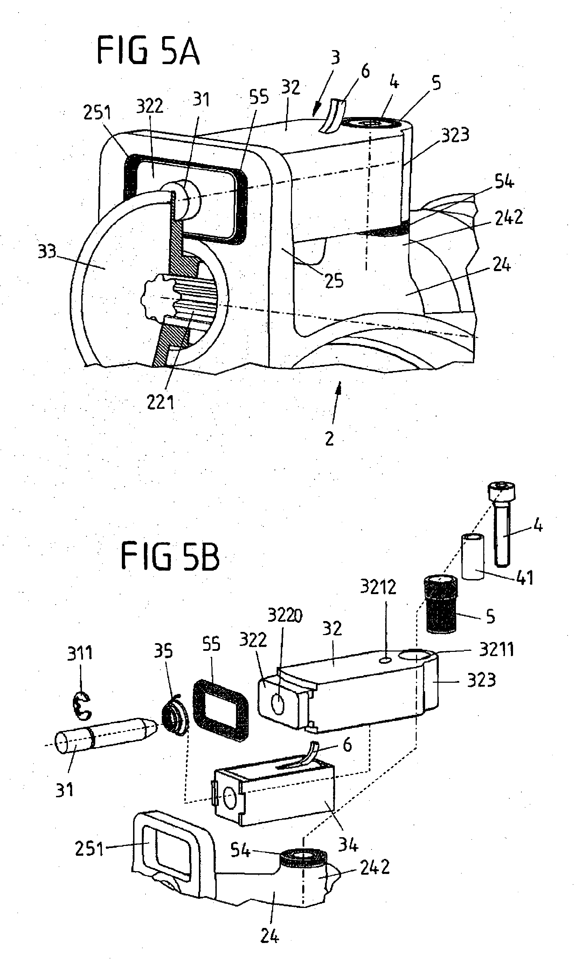

Die Figuren 5A und 5B betreffen eine weitere Ausgestaltung eines Überlagerungsantriebes 2 des erfindungsgemäßen Lenkrades. Danach weist das Gehäuse 24 des Überlagerungsantriebes 2 einen Halterungsabschnitt 25 auf, der zumindest näherungsweise senkrecht (quer) zur Achse der Antriebsschnecke (nicht dargestellt) des Überlagerungsantriebes verläuft.

In dem Halterungsabschnitt 25 ist eine fensterartige Aussparung 251 ausgebildet, in die ein stirnseitiger Abschnitt 322 des Gehäuses 32 der Arretierungseinrichtung 3 hineinragt und somit an dem Halterungsabschnitt 25 gelagert ist. In dem Abschnitt 322 des Gehäuses 3 ist die Öffnung 3220 ausgebildet, durch die der Bolzen 31 der Arretierungseinrichtung 3 aus dem Gehäuse 32 in Richtung auf die Arretierscheibe 33 hinausragt. Der Bolzen 31 kann mit einem Sicherungsring 311 versehen sein, der als Anschlag wirkt, um die axiale Bewegungsfreiheit des Bolzens zu begrenzen und gleichzeitig als Widerlager für die Druckfeder 35 dient. Zwischen dem kompletten inneren Rand der Aussparung 251 des Halterungsabschnitts 25 und dem Abschnitt 322 des Gehäuses 3 verläuft ein (rechteckiges) elastisches Element 55.

Darüber hinaus weist das Gehäuse 24 des Überlagerungsantriebes 2 einen domartigen Verbindungsabschnitt 242, der sich ebenfalls zumindest näherungsweise senkrecht (quer) zu der Achse der Antriebsschnecke des Überlagerungsantriebes erstreckt und auf dem ein Abschnitt 323 des Gehäuses 32 der Arretierungseinrichtung 3 aufliegt, wobei die einander zugewandten Seiten des Abschnitts 323 und des Verbindungsabschnitts 242 jeweils abgeflacht gestaltet sind. Das Gehäuse 32 der Arretierungseinrichtung 3 liegt somit nicht mit seiner gesamten Unterseite an dem Gehäuse 24 des Überlagerungsantriebes 2 an, sondern nur abschnittsweise im Bereich des Halterungsabschnitts 25 und des Verbindungsabschnitts 242.

Der Abschnitt 323 ist mit einem größeren Abstand entlang der Längsachse der Antriebsschnecke von der Arretierscheibe 33 positioniert als der Abschnitt 322. Zwischen dem Abschnitt 323 des Gehäuses 32 und dem Verbindungsabschnitt 242 ist ein weiteres, als Ringscheibe 54 ausgebildetes elastisches Element vorgesehen.

Die Kontur des Abschnitts 323 des Gehäuses 32 ist zum Teil als halbzylinderförmige Ausbuchtung gestaltet, wobei die Kontur der Ausbuchtung mit der Kontur des Verbindungsabschnitts 242 des Gehäuses 24 fluchtet.

Die Arretierungseinrichtung 3 und der Überlagerungsantrieb 2 sind so ausgestaltet, dass die Achsen des Arretierbolzens 31 und der Antriebsschnecke schräg zueinander verlaufen. In einer Abwandlung des Ausführungsbeispiels der Figuren 5A und 5B verlaufen der Arretierbolzen und die Antriebsschnecke parallel zueinander, wobei z.B. die Höhe (quer zur Antriebsschnecke gemessen) des Verbindungsabschnitts 242 entsprechend bemessen sein kann.

In dem Abschnitt 323 ist eine Aussparung in Form einer Durchgangsbohrung 3211 vorgesehen, durch die sich ein Befestigungselement in Form einer Schraube 4 erstreckt, die z.B. in eine Gewindebohrung des Verbindungsabschnitts 242 eingeschraubt ist. Zwischen dem Rand der Durchgangsbohrung 3211 befindet sich analog zu den Fig. 3A, 3B ein elastisches Element in Form einer elastischen Hülse 5, wobei die Schraube 4 durch die elastische Hülse 5 und eine Öffnung in der Ringscheibe 54 hindurchgreift. Die elastische Hülse 5 weist vorliegend eine, der Durchgangsbohrung 3211 und Schraube 4 angepasste, abgestufte Außen- bzw. Innenkontur auf.

Darüber hinaus ist eine Distanzhülse 41 vorgesehen, die den Schaft der Schraube 4 umgibt und die ebenfalls durch die elastischen Hülse 5 und die Ringscheibe 54 hindurch in die Gewindebohrung des Verbindungsabschnitts 242 einläuft. Die Distanzhülse 41 ist im montierten Zustand der Anordnung aus Arretierungseinrichtung 3 und Überlagerungsgetriebe zwischen dem Schraubenkopf der Schraube 4 und dem Verbindungsabschnitt 242 verspannt (fixiert), wobei die Länge der Distanzhülse 41 so gewählt ist, dass das Spiel zwischen dem Gehäuse 32 der Arretierungseinrichtung 3 und dem Gehäuse 24 des Überlagerungsgetriebes eine ausreichende Ausgleichsbewegung zwischen der Arretierungseinrichtung 3 und dem Überlagerungsantrieb 2, entgegen der Kraftwirkung der vorgespannten elastischen Elemente 5, 54 und 55, ermöglicht.

Die Lagerung des Gehäuses 32 der Arretierungseinrichtung 3 an dem Gehäuse 24 des Überlagerungsgetriebes 2 über die elastischen Elemente 5, 54 und 55 ermöglicht hier eine Ausgleichsbewegung der Arretierungseinrichtung 3 in einer im Prinzip beliebigen Richtung.

Das Gehäuse 32 der Arretierungseinrichtung 3 weist zudem eine Öffnung 3212 auf, durch die eine elektrische Anschlussleitung, 6, die mit dem Aktuator 34 der Arretierungseinrichtung 3 verbunden ist, herausgeführt ist.

Es wird darauf hingewiesen, dass Elemente der zuvor beschriebenen Ausführungsbeispiele natürlich auch in Kombination miteinander verwendet werden können, Zum Beispiel könnte die symmetrische Anordnung der Befestigungsschrauben aus den Figuren 4A und 4B auch mit einem gemäß den Figuren 3A und 3B plan ausgestalteten Anlageabschnitt 241 des Gehäuses 24 des Überlagerungsantriebes 2 verwendet werden.

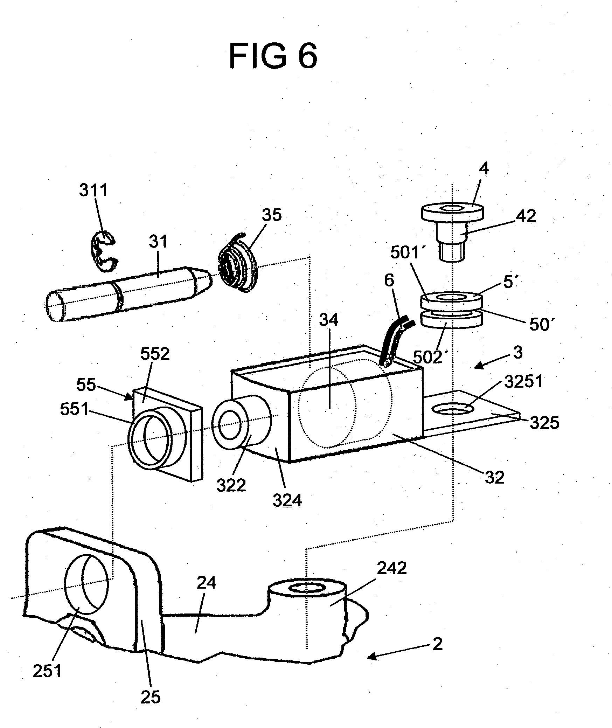

Fig. 6 betrifft eine Abwandlung des Überlagerungsantriebes 2 und der Arretierungseinrichtung 3 der Fig. 5A, B. Die Aussparung 251 in dem Halterungsabschnitt 25 des Gehäuses 24 des Überlagerungsantriebes 2 ist hier als kreisförmige Durchgangsöffnung ausgebildet. Dementsprechend weist der in die Aussparung 25 hineinragende und von einer Stirnseite 324 des Gehäuses 32 der Arretierungseinrichtung 3 abstehende Abschnitt 322 eine Kreiszylinderform auf.

Der kreiszylindrische Abschnitt 322 des Gehäuses 32 wird von einem elastischen Element 55 als Bestandteil der Lagerungsmittel umgeben, wobei das elastische Element 55 einen (hohl)kreiszylindrischen Abschnitt 551 und einen davon abragenden (im Wesentlichen rechteckigen) Flanschabschnitt 552 aufweist. Der Flanschabschnitt 552 befindet sich im montierten Zustand, in Wirkrichtung des Arretierbolzens 31 betrachtet, zwischen der Stirnseite 324 des Gehäuses 32 und dem Halterungsabschnitt 25 des Gehäuses 24. Somit ist auch in der erwähnten Wirkrichtung (längs des Arretierbolzens 31) das Gehäuse 32 der Arretierungseinrichtung 3 gegenüber dem Halteabschnitt 25 des Gehäuses 24 des Überlagerungsantriebes 2 elastisch gelagert.

Ein weiterer Unterschied zu den Fig. 5A und 5B besteht darin, dass der Aktuator 34 der Arretierungseinrichtung 3 kein eigenes Gehäuse aufweist, sondern lediglich zusammen mit dem Arretierbolzen 31, der Druckfeder 35 und dem Sicherungsring 311 der Arretierungseinrichtung 3 im Gehäuse 32 angeordnet ist. Der Arretierbolzen 31, die Druckfeder 35 und der Sicherungsring 311 sind insbesondere wie in Bezug auf die vorhergehenden Figuren erläutert ausgebildet. Entsprechend weist die Arretierungseinrichtung 3 auch eine mit dem Arretierbolzen 31 (als Arretierelement) in Arretierposition zusammenwirkende Arretierscheibe (als rotierbares Element) auf, die in Fig. 6 allerdings nicht mit dargestellt ist.

Darüber hinaus ist das Gehäuse 32 der Arretierungseinrichtung 3 an einer dem Halterungsabschnitt 25 abgewandten Seite mit einem Abschnitt 325 in Form einer (insbesondere im Wesentlichen ebenen) Lasche versehen, welche eine Durchgangsbohrung 3251 aufweist. Im montierten Zustand ragt eine Schraube 4 durch die Durchgangsbohrung 3251 hindurch und ist mit dem Verbindungsabschnitt 242 des Gehäuses 24 des Überlagerungsantriebes 2 verbunden. Die Schraube 4 ist mit einem Absatz 42 ohne Gewinde ausgeführt, welcher die Funktion der Distanzhülse 41 im Ausführungsbeispiel der der Fig. 5A und 5B erfüllt.

Die Lagerungsmittel weisen des Weiteren ein hülsenartiges elastisches Element 5' auf, das zwei durch eine umlaufende, ringförmige Nut 50' getrennte scheibenförmige Bereiche 501', 502' besitzt. In die Ringnut 50' greift der Rand der Durchgangsbohrung 3251 ein, sodass sich jeweils einer der scheibenförmigen Bereiche 501', 502' auf einer Seite des laschenartigen Abschnitts 325 befindet. Insbesondere befindet sich der untere (der Bereich 502') der beiden Bereiche 501', 502' zwischen einer der Verbindungsabschnitt 242 zugewandten Unterseite des laschenartigen Abschnitts 325 und dem Verbindungsabschnitt 242, so dass das Gehäuse 32 der Arretierungseinrichtung 3 auch im Bereich des Verbindungsabschnittes 242 und der Schraube 4 elastisch am Gehäuse 24 des Überlagerungsantriebes 2 gelagert ist.

### Bezugszeichenliste

- 1: Lenkrad
- 2: Überlagerungsantrieb
- 3: Arretierungseinrichtung
- 4, 4a, 4b: Schraube
- 5, 5': elastische Hülse
- 6: Anschlussleitung
- 11: Lenkradkranz
- 12: Speiche
- 21: Schneckenrad
- 22: Antriebsschnecke
- 23: Elektromotor
- 24: Gehäuse Überlagerungsantrieb
- 25: Halterungsabschnitt
- 31: Arretierbolzen
- 32: Gehäuse Arretierungseinrichtung
- 33: Arretierscheibe
- 34: Aktuator
- 35: Druckfeder
- 41: Distanzhülse
- 42: Absatz
- 50': Ringnut
- 51, 52, 53, 55: elastisches Element
- 54: elastische Ringscheibe
- 221: freies Ende
- 222a, 222b: Verbindungsbereich
- 241: Anlageabschnitt
- 242: Verbindungsabschnitt
- 251: Aussparung
- 311: Sicherungsring
- 321a, 321b: Ausbuchtung
- 322: Abschnitt
- 323: Abschnitt
- 324: Stirnseite
- 325: laschenartiger Abschnitt
- 331: Aussparung
- 501', 502': scheibenförmiger Bereich
- 551: kreiszylindrischen Abschnitt
- 552: Flanschabschnitt
- 3211, 3211a, 3211b: Durchgangsbohrung
- 3212: Öffnung
- 3220: Öffnung
- 3251: Durchgangsöffnung

## Patentansprüche

1. Lenkrad für ein Kraftfahrzeug, mit
- einem Lenkradkranz (11), über den das Lenkrad (1) von einem Fahrer des Kraftfahrzeuges zum Erzeugen eines Lenkwinkels betätigbar ist;
- einem Überlagerungsantrieb (2) zum Erzeugen eines Lenkwinkels, der mit einem durch Betätigung des Lenkradkranzes (11) erzeugten Lenkwinkel überlagerbar ist;
- einer von dem Überlagerungsantrieb (2) verschiedene Arretierungseinrichtung (3), mit der der Überlagerungsantrieb (2) durch mechanische Einwirkung arretierbar ist; **gekennzeichnet durch**
- Lagerungsmittel, mittels derer ein Gehäuse (32) der Arretierungseinrichtung (3) an einem Gehäuse (24) des Überlagerungsantriebs (2) so elastisch gelagert ist, dass es eine Ausgleichsbewegung relativ zu dem Gehäuse (24) des Überlagerungsantriebs (2) ausführen kann.

2. Lenkrad nach Anspruch 1, **dadurch gekennzeichnet, dass** der Überlagerungsantrieb (2) eine mit einem Schneckenrad (21) kämmende und in seinem Gehäuse (24) angeordnete Antriebsschnecke (22) aufweist, wobei die Arretierungseinrichtung (3) an einem Anlageabschnitt (241) des Gehäuses (24) des Überlagerungsantriebs (2) angeordnet ist.

3. Lenkrad nach Anspruch 1 oder 2, **dadurch gekennzeichnet, dass** die Arretierungseinrichtung (3) ein Arretierelement (31) zum mechanischen Arretieren des Überlagerungsantriebs (2) sowie eine Aktuatoranordnung zum Bewegen des Arretierelementes aus einer Freigabeposition in eine Arretierposition und umgekehrt aufweist, wobei das Arretierelement und/oder die Aktuatoranordnung in dem Gehäuse (32) der Arretierungseinrichtung (3) angeordnet sind.

4. Lenkrad nach Anspruch 2 und 3, **dadurch gekennzeichnet, dass** das Gehäuse (32) der Arretierungseinrichtung (3) an dem Anlageabschnitt (241) des Gehäuses (24) des Überlagerungsantriebs (2) angeordnet und über die Lagerungsmittel so gelagert ist, dass das Gehäuse (32) der Arretierungseinrichtung (3) eine Ausgleichsbewegung relativ zu dem Gehäuse (24) des Überlagerungsantriebs (2) ausführen kann.

5. Lenkrad nach einem der vorhergehenden Ansprüche, **dadurch gekennzeichnet, dass** die Lagerungsmittel mindestens ein elastisches Element (51, 54, 55, 502') umfassen, das sich zwischen dem Gehäuse (24) des Überlagerungsantriebs (2) und dem Gehäuse (32) der Arretierungseinrichtung (3) erstreckt.

6. Lenkrad nach einem der Ansprüche 3 bis 5, **dadurch gekennzeichnet, dass** die Arretierungseinrichtung (3) über mindestens ein Befestigungselement (4, 4a), das eine Aussparung (3211, 3211 a, 3251) in dem Gehäuse (32) der Arretierungseinrichtung (3) durchgreift, an dem Überlagerungsantrieb (2) festgelegt ist, wobei die Lagerungsmittel mindestens ein elastisches Element (5, 5') umfassen, das sich zwischen dem Befestigungselement (4, 4a) und einer dem Befestigungselement (4, 4a) zugewandten Innenseite der Aussparung (3211, 3211 a, 3251) erstreckt.

7. Lenkrad nach einem der vorhergehenden Ansprüche, **dadurch gekennzeichnet, dass** der Überlagerungsantrieb (2) eine mit einem Schneckenrad (21) kämmende Antriebschnecke (22) und die Arretierungseinrichtung (3) ein Arretierelement (31) zum Arretieren des Überlagerungsantriebs (2) aufweist, wobei die Achse der Antriebschnecke (21) und die Haupterstreckungsrichtung des Arretierelements (31) parallel zueinander orientiert sind.

8. Lenkrad nach einem der Ansprüche 1 bis 6, **dadurch gekennzeichnet, dass** der Überlagerungsantrieb (2) eine mit einem Schneckenrad (21) kämmende Antriebschnecke (22) und die Arretierungseinrichtung (3) ein Arretierelement (31) zum Arretieren des Überlagerungsantriebs (2) aufweist, wobei die Achse der Antriebschnecke (22) und die Haupterstreckungsrichtung des Arretierelements (31) schräg zueinander orientiert sind.

9. Lenkrad nach einem der Ansprüche 2 bis 8, **dadurch gekennzeichnet, dass** die Antriebsschnecke (22) über die Lagerungsmittel elastisch in dem Gehäuse (24) des Überlagerungsantriebs (2) gelagert ist.

10. Lenkrad nach einem der vorhergehenden Ansprüche, **dadurch gekennzeichnet, dass** das Gehäuse (24) des Überlagerungsantriebs (2) einen sich schräg oder quer zur Längsachse einer Antriebsschnecke (22) des Überlagerungsantriebs (2) erstreckenden Halterungsabschnitt (25) aufweist, in dem eine Aussparung (251) ausgebildet ist, in die ein Abschnitt (322) des Gehäuses (32) der Arretierungseinrichtung (3) hineinragt, wobei die Lagerungsmittel mindestens ein elastisches Element (55) umfassen, das zwischen dem Halterungsabschnitt (25) und dem in die Aussparung (251) hineinragenden Abschnitt (322) des Gehäuses (32) der Arretierungseinrichtung (3) angeordnet ist.

11. Lenkrad nach Anspruch 10, **dadurch gekennzeichnet, dass** das Gehäuse (24) des Überlagerungsantriebs (2) einen sich schräg oder quer zur Längsachse der Antriebsschnecke (22) erstreckenden Verbindungsabschnitt (242) aufweist, wobei die Lagerungsmittel mindestens ein elastisches Element (54, 502') umfassen, über das ein Abschnitt (323, 325) des Gehäuses (32) der Arretierungseinrichtung (3) auf dem Verbindungsabschnitt (242) aufliegt.

12. Lenkrad nach Anspruch 11, **dadurch gekennzeichnet, dass** in dem auf dem Verbindungsabschnitt (242) aufliegenden Abschnitt (323, 325) des Gehäuses (32) der Arretierungseinrichtung (3) eine Aussparung (3211, 3251) ausgebildet ist, durch die ein Befestigungselement (4) hindurchgreift, über das die Arretierungseinrichtung (3) an dem Überlagerungsantrieb (2) festgelegt ist, wobei die Lagerungsmittel mindestens ein elastisches Element (5, 5') umfassen, das sich zwischen dem Befestigungselement (4) und einer dem Befestigungselement (4) zugewandten Innenseite der Aussparung (3211, 3251) erstreckt.

## Claims

1. A steering wheel for a motor vehicle, comprising
- a steering wheel rim (11), via which the steering wheel (1) can be actuated by a driver of the motor vehicle for generating a steering angle;
- a superposition drive (2) for generating a steering angle which can be superimposed with a steering angle generated by actuating the steering wheel rim (11);
- a locking means (3) different from the superposition drive (2), with which the superposition drive (2) can be locked by mechanical action;
**characterized by**
- bearing means, by means of which a housing (32) of the locking means (3) is elastically mounted on a housing (24) of the superposition drive (2) such that it can perform a compensating movement relative to the housing (24) of the superposition drive (2).

2. The steering wheel according to claim 1, **characterized in that** the superposition drive (2) includes a drive worm (22) meshing with a worm gear (21) and arranged in its housing (24), wherein the locking means (3) is arranged on an abutment portion (241) of the housing (24) of the superposition drive (2).

3. The steering wheel according to claim 1 or 2, **characterized in that** the locking means (3) includes a locking element (31) for mechanically locking the superposition drive (2) as well as an actuator arrangement for moving the locking element from a release position into a locking position and vice versa, wherein the locking element and/or the actuator arrangement are arranged in the housing (32) of the locking means (3).

4. The steering wheel according to claims 2 and 3, **characterized in that** the housing (32) of the locking means (3) is arranged on the abutment portion (241) of the housing (24) of the superposition drive (2) and mounted via the bearing means such that the housing (32) of the locking means (3) can perform a compensating movement relative to the housing (24) of the superposition drive (2).

5. The steering wheel according to any of the preceding claims, **characterized in that** the bearing means comprise at least one elastic element (51, 54, 55, 502') which extends between the housing (24) of the superposition drive (2) and the housing (32) of the locking means (3).

6. The steering wheel according to any of claims 3 to 5, **characterized in that** the locking means (3) is fixed on the superposition drive (2) via at least one fastening element (4, 4a) which reaches through a cutout (3211, 3211 a, 3251) in the housing (32) of the locking means (3), wherein the bearing means comprise at least one elastic element (5, 5') which extends between the fastening element (4, 4a) and an inside of the cutout (3211, 3211 a, 3251) facing the fastening element (4, 4a).

7. The steering wheel according to any of the preceding claims, **characterized in that** the superposition drive (2) includes a drive worm (22) meshing with a worm gear (21) and the locking means (3) includes a locking element (31) for locking the superposition drive (2), wherein the axis of the drive worm (21) and the main direction of extension of the locking element (31) are oriented parallel to each other.

8. The steering wheel according to any of claims 1 to 6, **characterized in that** the superposition drive (2) includes a drive worm (22) meshing with a worm gear (21) and the locking means (3) includes a locking element (31) for locking the superposition drive (2), wherein the axis of the drive worm (22) and the main direction of extension of the locking element (31) are oriented obliquely to each other.

9. The steering wheel according to any of claims 2 to 8, **characterized in that** the drive worm (22) is elastically mounted in the housing (24) of the superposition drive (2) via the bearing means.

10. The steering wheel according to any of the preceding claims, **characterized in that** the housing (24) of the superposition drive (2) includes a holding portion (25) extending obliquely or transversely to the longitudinal axis of a drive worm (22) of the superposition drive (2), in which a cutout (251) is formed, into which a portion (322) of the housing (32) of the locking means (3) protrudes, wherein the bearing means comprise at least one elastic element (55) which is arranged between the holding portion (25) and the portion (322) of the housing (32) of the locking means (3) protruding into the cutout (251).

11. The steering wheel according to claim 10, **characterized in that** the housing (24) of the superposition drive (2) includes a connecting portion (242) extending obliquely or transversely to the longitudinal axis of the drive worm (22), wherein the bearing means comprise at least one elastic element (54, 502') via which a portion (323, 325) of the housing (32) of the locking means (3) rests on the connecting portion (242).

12. The steering wheel according to claim 11, **characterized in that** in the portion (323, 325) of the housing (32) of the locking means (3) resting on the connecting portion (242) a cutout (3211, 3251) is formed, through which a fastening element (4) reaches, via which the locking means (3) is fixed on the superposition drive (2), wherein the bearing means comprise at least one elastic element (5, 5') which extends between the fastening element (4) and an inside of the cutout (3211, 3251) facing the fastening element (4).

## Revendications

1. Volant pour un véhicule automobile, avec
- une jante de volant (11), par l'intermédiaire de laquelle le volant (1) peut être actionné par un conducteur du véhicule automobile pour la génération d'un angle de braquage;
- un entraînement à superposition (2) pour la génération d'un angle de braquage qui peut être superposé à un angle de braquage généré par l'actionnement de la jante de volant (11) ;
- un dispositif d'arrêt (3) distinct de l'entraînement à superposition (2), avec lequel l'entraînement à superposition (2) peut être arrêté par action mécanique ;
**caractérisé par**
- des moyens de montage, à l'aide desquels un boîtier (32) du dispositif d'arrêt (3) est monté de manière élastique sur un boîtier (24) de l'entraînement à superposition (2) de sorte qu'il puisse réaliser un mouvement de compensation par rapport au boîtier (24) de l'entraînement à superposition (2).

2. Volant selon la revendication 1, **caractérisé en ce que** l'entraînement à superposition (2) comprend une vis d'entraînement (22) s'engrenant avec une roue hélicoïdale (21) et agencée dans son boîtier (24), le dispositif d'arrêt (3) étant agencé sur une portion d'appui (241) du boîtier (24) de l'entraînement à superposition (2).

3. Volant selon la revendication 1 ou 2, **caractérisé en ce que** le dispositif d'arrêt (3) comprend un élément d'arrêt (31) pour l'arrêt mécanique de l'entraînement à superposition (2) ainsi qu'un ensemble d'actionnement pour le déplacement de l'élément d'arrêt d'une position de libération à une position d'arrêt et inversement, l'élément d'arrêt et/ou l'ensemble d'actionnement étant agencé dans le boîtier (32) du dispositif d'arrêt (3).

4. Volant selon les revendications 2 et 3, **caractérisé en ce que** le boîtier (32) du dispositif d'arrêt (3) est agencé sur la portion d'appui (241) du boîtier (24) de l'entraînement à superposition (2) et est monté par le biais des moyens de montage de sorte que le boîtier (32) du dispositif d'arrêt (3) puisse réaliser un mouvement de compensation par rapport au boîtier (24) de l'entraînement à superposition (2).

5. Volant selon l'une quelconque des revendications précédentes, **caractérisé en ce que** les moyens de montage comprennent au moins un élément élastique (51, 54, 55, 502') qui s'étend entre le boîtier (24) de l'entraînement à superposition (2) et le boîtier (32) du dispositif d'arrêt (3).

6. Volant selon l'une quelconque des revendications 3 à 5, **caractérisé en ce que** le dispositif d'arrêt (3) est fixé sur l'entraînement à superposition (2) par au moins un élément de fixation (4, 4a) qui traverse un évidement (3211, 3211a, 3251) dans le boîtier (32) du dispositif d'arrêt (3), les moyens de montage comportant au moins un élément élastique (5, 5') qui s'étend entre l'élément de fixation (4, 4a) et un côté intérieur tourné vers l'élément de fixation (4, 4a) de l'évidement (3211, 3211a, 3251).

7. Volant selon l'une quelconque des revendications précédentes, **caractérisé en ce que** l'entraînement à superposition (2) présente une vis d'entraînement (22) s'engrenant avec une roue hélicoïdale (21) et le dispositif d'arrêt (3) présente un élément d'arrêt (31) pour l'arrêt de l'entraînement à superposition (2), l'axe de la vis d'entraînement (21) et la direction d'extension principale de l'élément d'arrêt (31) étant orientés parallèlement l'un à l'autre.

8. Volant selon l'une quelconque des revendications 1 à 6, **caractérisé en ce que** l'entraînement à superposition (2) présente une vis d'entraînement (22) s'engrenant avec une roue hélicoïdale (21) et le dispositif d'arrêt (3) présente un élément d'arrêt (31) pour l'arrêt de l'entraînement à superposition (2), l'axe de la vis d'entraînement (22) et la direction d'extension principale de l'élément d'arrêt (31) étant orientés en biais l'un par rapport à l'autre.

9. Volant selon l'une quelconque des revendications 2 à 8, **caractérisé en ce que** la vis d'entraînement (22) est montée de manière élastique par les moyens de montage dans le boîtier (24) de l'entraînement à superposition (2).

10. Volant selon l'une quelconque des revendications précédentes, **caractérisé en ce que** le boîtier (24) de l'entraînement à superposition (2) présente une portion de support (25) s'étendant en biais ou transversalement à l'axe longitudinal d'une vis d'entraînement (22) de l'entraînement à superposition (2), dans laquelle un évidement (251) est réalisé, dans lequel une portion (322) du boîtier (32) du dispositif d'arrêt (3) pénètre, les moyens de montage comportant au moins un élément élastique (55) qui est agencé entre la portion de support (25) et la portion (322) pénétrant dans l'évidement (251) du boîtier (32) du dispositif d'arrêt (3).

11. Volant selon la revendication 10, **caractérisé en ce que** le boîtier (24) de l'entraînement à superposition (2) présente une portion de liaison (242) s'étendant en biais ou transversalement à l'axe longitudinal de la vis d'entraînement (22), les moyens de montage comportant au moins un élément élastique (54, 502'), par l'intermédiaire duquel une portion (323, 325) du boîtier (32) du dispositif d'arrêt (3) repose sur la portion de liaison (242).

12. Volant selon la revendication 11, **caractérisé en ce qu'**un évidement (3211, 3251) est réalisé dans la portion (323, 325) reposant sur la portion de liaison (242) du boîtier (32) du dispositif d'arrêt (3), que traverse un élément de fixation (4), par l'intermédiaire duquel le dispositif d'arrêt (3) est fixé sur l'entraînement à superposition (2), les moyens de montage comportant au moins un élément élastique (5, 5') qui s'étend entre l'élément de fixation (4) et un côté intérieur tourné vers l'élément de fixation (4) de l'évidement (3211, 3251).
